Europäisches Patentamt

European Patent Office

Office européen des brevets

(19)

(11)  **EP 0 745 448 A2**

(12)  **EUROPÄISCHE PATENTANMELDUNG**

(43) Veröffentlichungstag:
04.12.1996  Patentblatt 1996/49

(51) Int. Cl.$^6$: **B23H 7/06**, B23H 7/26

(21) Anmeldenummer: 96107448.1

(22) Anmeldetag: 10.05.1996

(84) Benannte Vertragsstaaten:
CH DE FR GB IT LI

(30) Priorität: 31.05.1995 DE 19519929

(71) Anmelder: AG für industrielle Elektronik
AGIE Losone bei Locarno
CH-6616 Losone/Locarno (CH)

(72) Erfinder: Damman, Matthias
6512 Giubiasco (CH)

(74) Vertreter: von Samson-Himmelstjerna, Friedrich
R., Dipl.-Phys. et al
SAMSON & PARTNER
Widenmayerstrasse 5
80538 München (DE)

(54)  **Verfahren und Vorrichtung zum Messen der Lage einer Drahtelektrode relativ zu einer maschinenbezogenen Achse einer Funkenerosionsmaschine**

(57)    Die Erfindung betrifft ein Verfahren und eine Vorrichtung zum Messen und/oder Einstellen der Lage einer Drahtelektrode relativ zu einer maschinenbezogenen Achse einer Funkenerosionsmaschine, in welcher die Drahtelektrode zwischen zwei Drahtführungen gespannt ist und die beiden Drahtführungen relativ zueinander bewegbar sind. Bei diesem Verfahren bzw. in einer Funkenerosionsmaschine mit einer entsprechend ausgelegten numerischen Steuerung werden nacheinander wenigstens eine der beiden Drahtführungen aus einer ersten Position parallel zur maschinenbezogenen Achse in eine zweite Position verschoben. Die Größe der hieraus resultierenden Änderung der Drahtelektrodenneigung gegenüber einer beliebigen Achse bezüglich wenigstens einer Richtungskomponente ermittelt. Aus dieser Meßgröße, sowie dem Ausmaß der Verschiebung wird die räumliche Lage der Drahtelektrode relativ zur maschinenbezogenen Achse in der wenigstens einen Richtungskomponente berechnet.

Fig. 5

$$F = \frac{X2 - X1}{HA/H1 - HA/H2}$$

EP 0 745 448 A2

**Beschreibung**

Die Erfindung betrifft ein Verfahren und eine Vorrichtung zum Messen und/oder Einstellen der Lage einer Drahtelektrode relativ zu einer maschinenbezogenen Achse einer Funkenerosionsmaschine, in welcher die Drahtelektrode zwischen zwei Drahtführungen gespannt ist und die beiden Drahtführungen relativ zueinander bewegbar sind.

Funkenerosionsmaschinen dienen zur hochpräzisen Bearbeitung von Werkstücken mittels Elektroden. Je nach Verwendungszweck können dabei die Elektroden unterschiedlich ausgebildet sein. Drahtelektroden finden etwa dann Verwendung, wenn aus einem Werkstück Stempel oder Matrizen ausgeschnitten werden sollen. Als Drahtelektrode wird hier wie im folgenden ein als Elektrode wirksamer Abschnitt eines durchlaufenden Drahtes bezeichnet. In der Regel wird ein solcher Abschnitt von zwei Angriffspunkten begrenzt, an welchen Führungsköpfe angreifen. Der Draht selbst verläuft dabei von einer Drahtbevorratung, etwa einer Spule, über den Elektrodenbereich zu einer Drahtentsorgung. Während der Funkenerosion wird er laufend weitertransportiert, um Abnutzungen im Elektrodenbereich auszugleichen.

Die Führungsköpfe und damit auch die Angriffspunkte können für gewöhnlich innerhalb eines von der Maschine vorgegebenen Rahmens frei relativ zueinander positioniert werden. Dabei sind sie meistens nicht unmittelbar mechanisch, sondern nur über ihre Steuerung miteinander verkoppelt. Voraussetzung für die gewünschte hochpräzise Steuerung einer Drahtelektrode ist deren exakte Ausrichtung parallel zu einer Hauptachse. Insbesondere bei mechanisch entkoppelten Führungsköpfen kann es hier jedoch durch Kollisionen oder Unterhaltsarbeiten zu Abweichungen kommen. Daher ist es notwendig, nach jedem größeren mechanischen Eingriff die Drahtelektrode neu auszurichten.

Es entspricht dabei dem Stand der Technik, eine Drahtelektrode unter elektrischer Spannung mehrfach gegen zwei längs der Hauptachse angeordnete Kontaktstellen zu führen. Die Ausrichtung ist erfolgt, wenn an beiden Stellen gleichzeitig ein elektrischer Kontakt auftritt. Derartige Verfahren werden etwa in den Druckschriften DE 4012530 A1 (Mitsubishi-Nakayama/Nagoya), JP 63-139617 A (NEC CORP-Hirono) oder US 5003147 (Brother-Kawanabe/Momonoi) beschrieben, wobei vor allem vertikale Positionsfehler berücksichtigt werden.

Ein solches Verfahren setzt jedoch eine dauerhaft sehr genaue Ausrichtung der Kontaktstellen voraus, was im Mikrometerbereich problematisch ist. Zudem erfordert es eine relativ hohe Anzahl von Arbeitsschritten, bis die gewünschte Ausrichtung erreicht ist. Hierdurch wird die Inbetriebnahme einer Funkenersionsmaschine erschwert bzw. verzögert.

Die DE 3940664 C2 (Mitsubishi-Morishita et al.) betrifft ein Verfahren zur Bestimmung der Position einer Drahtelektrode relativ zu einem Werkstück.

Die Druckschrift JP 62-208826 (Mitsubishi) schlägt demgegenüber vor, eine Referenzkugel oder einen Referenzstab an einer vorbestimmten Position zu befestigen. Die Drahtelektrode wird zum Zwecke ihrer Ausrichtung zunächst absichtlich in einer Richtung von der Hauptachse -hier die Flächennormale zur Arbeitsebene- weggeneigt. Hierzu wird beispielsweise die untere Drahtführung festgehalten, während die obere Drahtführung in der gewünschten Richtung um eine vorbestimmte Strecke verschoben wird (1. Bewegungsschritt). Sodann wird die geneigte Drahtelektrode mit einer Seite der Referenzkugel (oder dem Referenzstab) in elektrischen Kontakt gebracht (2. Bewegungsschritt). Dabei werden die Koordinaten einer Drahtführung festgestellt. Im Anschluß wird die Drahtelektrode in der entgegengesetzten Richtung in gleicher Weise gegen die Hauptachse verneigt (3. Bewegungsschritt) und mit der gegenüberliegenden Seite der Referenzkugel (oder dem Referenzstab) in Kontakt gebracht (4.-7. Bewegungsschritt). Dabei erfolgt die neue Neigung beispielsweise, indem wiederum die untere Drahtführung festgehalten wird, während die obere Drahtführung entgegen der ersten Richtung und um die doppelte Strecke wie beim erstenmal verschoben wird (4. Bewegungsschritt). Um den Kontakt auf der gegenüberliegenden Seite der Kugel zu ermöglichen, muß die Drahtelektrode zudem um die Kugel herumbewegt werden (5.-7. Bewegungsschritt). Die Koordinaten der einen Drahtführung werden beim Auftreten eines zweiten Kontaktes erneut festgestellt. Das gesamte Verfahren wird nach einer Verschiebung der oberen Drahtführung längs der Flächennormalen zur Arbeitsebene wiederholt (8., 9.-15. Bewegungsschritt). Im Anschluß wird aus den so erhaltenen Koordinaten gegebenenfalls die Abweichung der Drahtelektrode von der Hauptachse berechnet und entsprechend korrigiert.

Die vorliegende Erfindung möchte ein vereinfachtes Verfahren zum Ausrichten einer Drahtelektrode, insbesondere in einer Funkenerosionsmaschine zur Verfügung stellen.

Sie erreicht dieses Ziel mit dem Gegenstand des Verfahrensanspruchs 1 oder des Vorrichtungsanspruchs 10, verfahrensmäßig also mit einem Verfahren zum Messen und/oder Einstellen der Lage einer Drahtelektrode relativ zu einer maschinenbezogenen Achse einer Funkenerosionsmaschine, in welcher die Drahtelektrode zwischen zwei Drahtführungen gespannt ist und die beiden Drahtführungen relativ zueinander bewegbar sind. Bei diesem Verfahren werden nacheinander wenigstens eine der beiden Drahtführungen aus einer ersten Position parallel zur maschinenbezogenen Achse in eine zweite Position verschoben. Die Größe der hieraus resultierenden Änderung der Drahtelektrodenneigung gegenüber einer beliebigen Achse bezüglich wenigstens einer Richtungskomponente ermittelt. Aus dieser Meßgröße, sowie dem Ausmaß der Verschiebung wird die räumliche Lage der Drahtelektrode relativ zur maschinenbezogenen Achse in der wenigstens einen Richtungskomponente berechnet (Anspruch 1). Vorrichtungsmäßig erreicht sie dieses Ziel mit einer Funkenerosionsmaschine, insbesondere zur Durchführung eines erfindungsgemäßen Verfahrens, in welcher die Drahtelektrode zwischen zwei Drahtführungen gespannt ist, die beiden Drahtführungen relativ zueinander bewegbar sind und eine numerische Steuerungseinrichtung vorgesehen ist, welche zur Messung und/oder Einstellung der Drahtelektrode parallel zu einer maschinenbezogenen Achse für die erfindungsgemäßen Verfahrensschritte ausgelegt ist (Anspruch 10).

Das Verfahren und die erfindungsgemäße Vorrichtung machen sich den Umstand zunutze, daß bei jeder Drahterosionsmaschine die einzelnen Angriffspunkte mit hoher Präzision gesteuert werden können. Es ist infolgedessen ohne weiteres möglich, sie längs einer beliebigen Hauptachse mit der erforderlichen Genauigkeit zu verschieben. Die Messung daraus resultierender Änderungen der Neigung der Drahtelektrode (also der Richtung, längs derer die Drahtelektrode verläuft) kann leicht mittels einer Kontaktstelle, einer Lichtschranke oder dergleichen durchgeführt werden. Im Vergleich zu den oben beschriebenen Verfahren entfallen viele Arbeitsschritte. Zudem ist es nicht mehr länger notwendig, präzise ausgerichtete Kontaktstellen bzw. eine exakt gearbeitete Referenzkugel oder dergleichen zu verwenden. Es ist im Gegenteil sogar möglich, beispielsweise eine Kante eines zu bearbeitenden Werkstücks als Kontaktstelle zu benützen (vgl. Anspruch 9).

In einer bevorzugten Ausgestaltung des erfindungsgemäßen Verfahrens wird wenigstens eine Drahtführung quer oder quer und parallel zur maschinenbezogenen Achse verschoben, bis die Drahtelektrode an eine Meßstelle herangeführt ist und die Daten wenigstens einer Drahtführung in dieser Position werden als erste Positionsdaten gespeichert. Wenigstens eine Drahtführung wird parallel zur maschinenbezogenen Achse verschoben und hierdurch - und/oder durch zusätzliches Parallelverschieben der Drahtführungen - die Drahtelektrode von der Meßstelle wieder entfernt. Beide Drahtführungen werden quer oder quer und parallel zur maschinenbezogenen Achse parallelverschoben, bis die Drahtelektrode erneut an die Meßstelle herangeführt ist, und die Daten der erreichten zweiten Lage der wenigstens einen Drahtführung werden als zweite Positionsdaten ermittelt. Die Lage der Drahtelektrode relativ zu der maschinenbezogenen Achse und in der Ebene der Parallelverschiebung wird aus den ersten und zweiten Positionsdaten, den Abständen der Drahtführungsebenen vor und nach dem Verschieben wenigstens einer der beiden Drahtführungen parallel zur maschinenbezogenen Achse und aus Daten über die Meßstelle berechnet (Anspruch 2).

Diese Ausführungsform ermöglicht eine besonders einfache Messung der Änderungen in der Neigung der Drahtelektrode. Sie erfordert je nach Anwendung zwischen drei und acht geradlinige Bewegungsschritte der Drahtführungen, wie weiter unten noch näher ausgeführt wird. Demgegenüber sind beispielsweise bei dem in der bereits genannten Druckschrift JP 62-208826 beschriebenen Verfahren fünfzehn solcher Bewegungen notwendig. Die Vorbereitung eines Arbeitsgangs der Funkenerosionsmaschine wird also deutlich vereinfacht und zeitlich stark verkürzt. Die Durchführung des Verfahrens nur für eine Verschiebungsrichtung (3-4 Bewegungsschritte) kann dabei im Prinzip ausreichen, um die Drahtelektrode für geradlinige Schnitte senkrecht zur Verschiebungsrichtung hinreichend auszurichten, zumal eine Verkippung der Drahtelektrode längs der Schnittrichtung nicht stören würde.

Vorzugsweise werden jedoch die einzelnen Verfahrensschritte wenigstens für eine zweite, zur ersten nicht parallelen (linear unabhängigen) Verschiebungsrichtung wiederholt bzw. mit den ersten Verfahrensschritten kombiniert (Anspruch 3).

Die einmalige Wiederholung des Verfahrens für eine zweite, von der ersten linear unabhängige Verschiebungsrichtung (insgesamt 6-8 Bewegungsschritte) reicht in der Regel für eine vollständige Ausrichtung der Drahtelektrode aus. Unter Umständen kann aber die Genauigkeit durch weitere Wiederholungen noch gesteigert werden.

In einer bevorzugten Ausführungsform wird jeweils nur eine der beiden Drahtführungen parallel zur maschinenbezogenen Achse verschoben. Die Daten der Lage der jeweils anderen Drahtführung werden an der Meßstelle als erste bzw. zweite Positionsdaten festgestellt (Anspruch 4).

Auf diese Weise wird eine größtmögliche Reduzierung der Zahl der Bewegungsschritte erreicht. Zugleich wird der notwendige Aufwand für die Berechnung der Abweichung der Neigung der Drahtelektrode von der Hauptachse minimiert.

Bevorzugt wird als Meßstelle ein Teilbereich eines elektrisch leitfähigen Elementes verwendet. An die Drahtelektrode wird während des Verfahrens eine elektrische Spannung angelegt und durch das Auftreten bzw. Abbrechen eines elektrischen Kontaktes zwischen der Drahtelektrode und dem elektrisch leitfähigen Element festgestellt, ob die Drahtelektrode an die Meßstelle kam bzw. von dieser weg gebracht wurde (Anspruch 5). Auf diese Weise kann eine erfindungsgemäße Meßstelle besonders einfach und kostengünstig erstellt werden.

In einer weiteren bevorzugten Ausführungsform stehen die maschinenbezogene Achse, die Richtung der ersten und/oder der zweiten Parallelverschiebung zueinander senkrecht (Anspruch 6).

Hierdurch wird die Genauigkeit der Ausrichtung der Drahtelektrode optimiert. Zugleich wird die Berechnung von Abweichungen der Neigung der Drahtelektrode von der Hauptachse weiter vereinfacht.

Bevorzugt ist der als Meßstelle verwendete Teilbereich des oder der elektrisch leitfähigen Elemente(s) geradlinig und insbesondere scharfkantig ausgebildet (Anspruch 7).

Gegenüber anderen geometrischen Ausgestaltungen vereinfacht eine geradlinige Ausgestaltung die notwendigen Berechnungen. Zudem kann eine solche geradlinige Kante besonders leicht mit hoher Genauigkeit hergestellt werden. Beispielsweise kann es ausreichen, einen dünnen Draht, etwa den gleichen, wie er auch für die Elektrode verwendet wird, straff zu spannen. Auf diese Weise entfällt die Notwendigkeit der Verwendung eines eigenen geradlinigen Bauteils, wodurch die erfindungsgemäße Lösung besonders wirtschaftlich wird.

Vorzugsweise sind die Richtung(en) der Parallelverschiebung(en) jeweils senkrecht zu der gerade ausgebildeten Kante des jeweiligen elektrisch leitfähigen Elementes (Anspruch 8).

Auf diese Weise werden Fehler bei der Ausrichtung der Drahtelektrode vermieden. Solche Fehler könnten andernfalls etwa dadurch entstehen, daß eine Verkippung der Neigung der Drahtelektrode nach der Parallelverschiebung wenigstens eines Angriffspunktes durch ein gegenüber der Verschiebungsrichtung der Drahtelektrode schiefliegendes Leiterelement zumindest teilweise kompensiert wird.

In einer weiteren bevorzugten Ausgestaltung des erfindungsgemäßen Verfahrens wird eine Werkstückkante als Meßstelle verwendet (Anspruch 9). Auf diese Weise wird ein gesondertes Leiterelement überflüssig. Das erfindungsgemäße Verfahren wird hierdurch besonders wirtschaftlich.

Vorzugsweise wird eine Meßstelle verwendet, die durch eine Innenkante eines im wesentlichen ringförmigen elektrischen Leiterelementes gebildet wird, welches von der Drahtelektrode durchsetzt wird (Anspruch 11). Dies hat den Vorteil, daß an einem Leiterelement mit nur einem Kontaktmeßgerät das erfindungsgemäße Verfahren beispielsweise für zwei zueinander senkrechte Bewegungsrichtungen durchgeführt werden kann.

Die Erfindung wird anhand von Ausführungsbeispielen und der beiliegenden Zeichnung noch näher erläutert. In der Zeichnung ist:

Fig.1-4    eine schematische Darstellung der einzelnen Schritte, um erfindungsgemäß notwendige Meßdaten zu erhalten;

Fig.5    eine Skizze zur Erläuterung der im Anschluß durchzuführenden Berechnungen;

Fig.6    eine Darstellung eines erfindungsgemäßen Leiterelements im Querschnitt; und

Fig.7,8    Darstellungen bevorzugter Ausgestaltungen eines Leiterelements in einer Draufsicht.

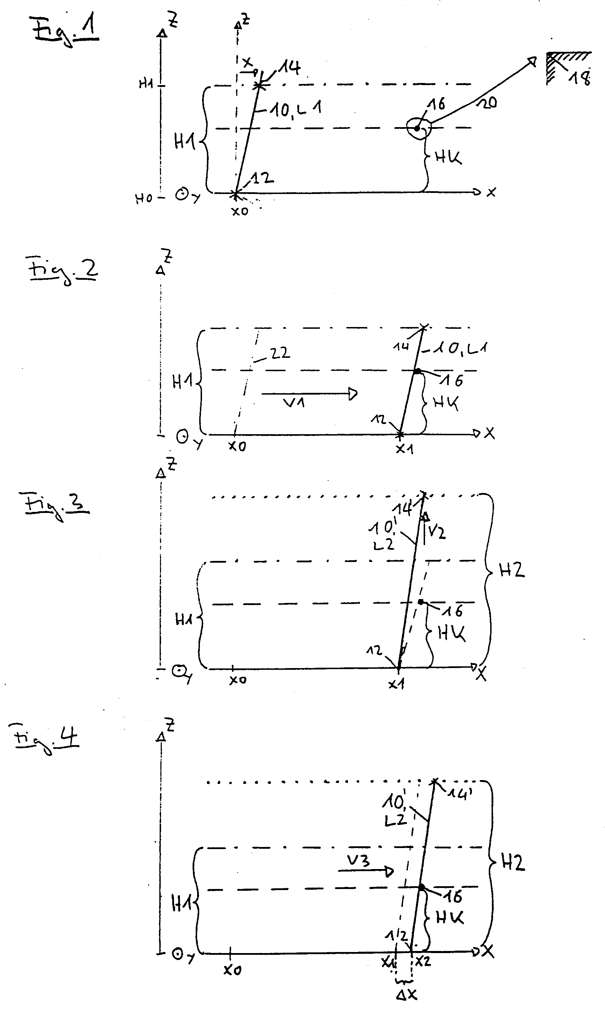

Fig.1 zeigt eine geradlinig verlaufende Drahtelektrode 10 mit einem unterem und einem oberen Angriffspunkt 12, 14. Die Drahtelektrode 10 ist in X-Richtung gegenüber einer von unten nach oben verlaufenden Hauptachse Z geneigt, d.h. der obere Angriffspunkt 14 befindet sich in der Zeichnung im Vergleich zum unteren Angriffspunkt 12 weiter rechts. Die X-Richtung verläuft demzufolge von links nach rechts. Der untere Angriffspunkt 12 befindet sich in Z-Richtung auf einer Nullhöhe H0, der obere Angriffspunkt 14 entsprechend auf einer ersten Höhe H1. Die Anfangsposition des unteren Angriffspunktes 12 in X-Richtung wird mit X0 bezeichnet. Die Hauptachse Z und die X-Richtung sind zueinander senkrecht angeordnet.

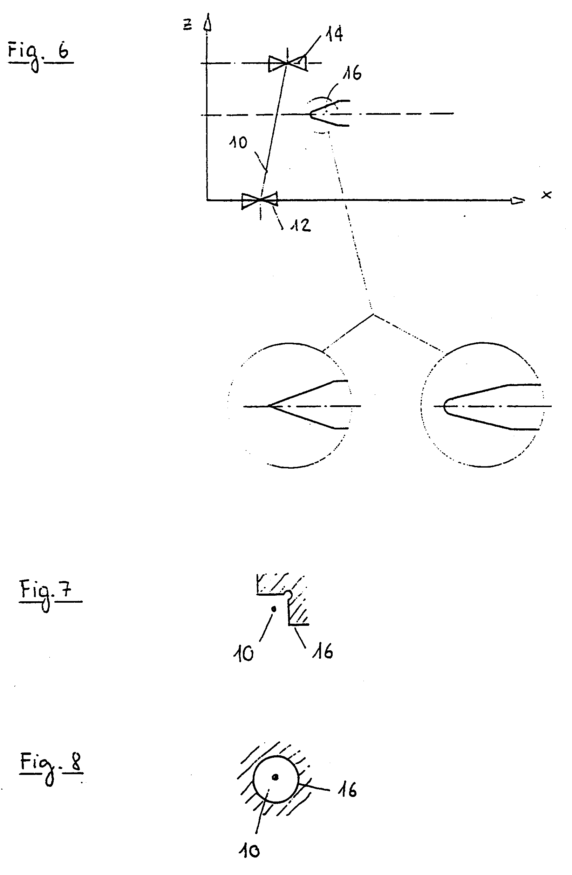

Das Ziel des anhand von Fig. 1 bis 4 geschilderten Verfahrens besteht darin, die Drahtelektrode 10 in X-Richtung parallel zur Hauptachse Z auszurichten. Zu diesem Zweck liegt an der Drahtelektrode eine elektrische Spannung an. Zudem ist ein Leiterelement 16 in X-Richtung, d.h. rechts, von der Drahtelektrode 10 und in Z-Richtung auf einer Kontakt- bzw. Antasthöhe HA angeordnet. Dabei liegt die Antasthöhe HA in Z-Richtung zwischen der Nullhöhe H0 und der ersten Höhe H1. Das Leiterlement 16 kann im Querschnitt spitz oder mit abgerundeter Spitze (vgl. Fig.6) ausgebildet sein. Dabei ist es senkrecht zur X- und zur Z-Richtung angeordnet. Die Drahtelektrode 10 ist, wie schon erwähnt, in diesem Beispiel nach rechts von der Hauptachse Z weg- und damit zu dem Leiterelement 16 hin geneigt. In diesem speziellen Fall ist es auch möglich, das Leiterelement 16 wegzulassen und stattdessen eine Werkstückkante 18 zu verwenden, wie in Fig.1 durch Pfeil 20 angedeutet ist. Sofern man generell ohne ein besonderes Leiterelement 16 auskommen möchte, muß man vor Beginn des Ausrichtungsverfahrens beispielsweise durch eine manuelle Einstellung eine solche Neigung der Drahtelektrode 10 zu einer Werkstückskante 18 hin einstellen, oder das Maschinenkoordinatensystem zur Werkstückkante neigen.

In Fig.2 wird die Drahtelektrode 10 in X-Richtung nach rechts verschoben, wie ein erster Verschiebungspfeil V1 andeutet. Dabei wird die Neigung der Drahtelektrode 10 aufrechterhalten. Würde man also in Fig.2 mehrere Stationen der Verschiebung durch Linien darstellen, so müßten sie alle parallel verlaufen. Dies wird durch die gestrichelte Linie 22 dargestellt. Die Verschiebung V1 wird gestoppt, sobald ein elektrischer Kontakt zwischen der Drahtelektrode 10 und dem Leiterelement 16 auftritt. Der untere Angriffspunkt 12 befindet sich dann in X-Richtung an einer ersten Position X1. Diese Position X1 wird festgestellt und gespeichert. Die Position kann allerdings auch während der Verschiebung festgestellt und gespeichert werden.

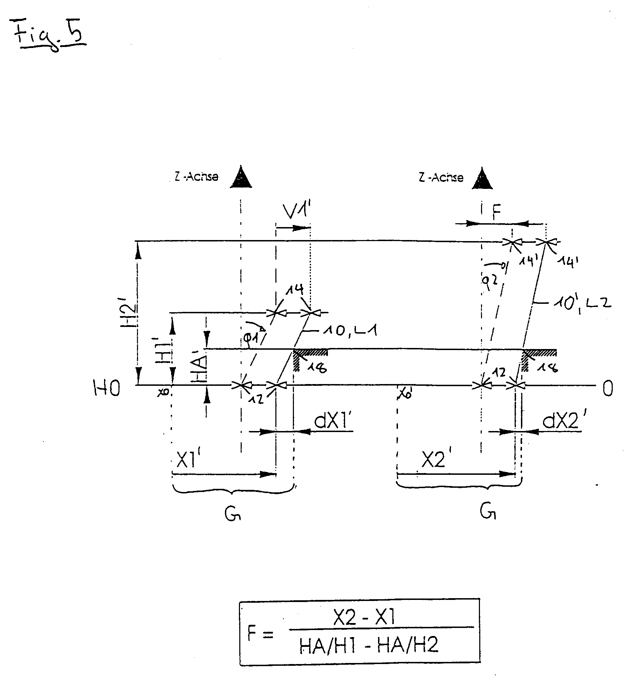

In Fig.3 wird der obere Angriffspunkt 14 der Drahtelektrode 10 nach oben parallel zu Hauptachse Z auf eine neue Höhe H2 verschoben, wie ein zweiter Verschiebungspfeil V2 andeutet. Auf diese Weise wird der Drahtabschnitt, welcher als Elektrode 10 dient von einer ersten Länge L1 auf eine zweite länge L2 verlängert. Dies ist möglich, da es sich bei der Drahtelektrode 10, wie oben ausgeführt, nur um einen Teilbereich eines durchlaufenden Drahtes handelt, welcher an zwei Angriffspunkten 12, 14 bzw. 14' durch Führungsköpfe läuft. Infolge dieser Verschiebung V2 des obersten Angriffspunktes 14 wird in Fig.3 der Kontakt zwischen der Drahtelektrode 10 und dem Leiterelement 16 unterbrochen, da der untere Angriffspunkt 12 an seiner Position belassen wird und die Neigung der Drahtelektrode 10 zu dem Leiterlement 16 hin somit abnimmt. Dieser Effekt wird aber nur dann erreicht, wenn die Drahtelektrode zunächst zu dem Leiterelement 16 hin geneigt ist. Für den allgemeinen Fall, wenn also auch eine entgegengesetzte Neigung möglich sein soll, muß zusätzlich die Drahtelektrode 10 von dem Leiterelement 16 entgegen der X-Richtung weg bewegt werden. Dabei besteht die Möglichkeit, die Steuerung der Drahtelektrode 10 so einzurichten, daß diese zusätzliche Verschiebung nur im Bedarfsfall durchgeführt wird oder daß die Bewegung V2 bereits zum Ausrichten gegenüber der Hauptachse benutzt wird. Zu diesem Zweck kann beispielsweise gemessen werden, ob während der Verschiebung V2 des oberen Angriffspunktes 14 der Kontakt zu dem Leiterelement 16 abreißt oder nicht und nur dann, wenn das nicht der Fall sein sollte, eine zusätzliche Verschiebung der gesamten Drahtelektrode 10 entgegen der X-Richtung, also nach links, veranlaßt werden.

In Fig. 4 wird die nun verlängerte Drahtelektrode 10' erneut unter Aufrechterhaltung der Neigung nach rechts, also in X-Richtung gegen das Leiterelement 16 verschoben, wie ein dritter Verschiebungspfeil V3 andeutet. Auch diese Verschiebung wird beendet, sobald ein elektrischer Kontakt mit dem Leiterelement 16 auftritt. Die neue Position X2 des unteren Angriffspunktes 12 wird festgestellt, gegebenenfalls gespeichert und mit seiner ersten Position X1 verglichen. Sofern die Drahtelektrode 10 zu Beginn des Verfahrens bereits parallel zur Hauptachse Z ausgerichtet gewesen wäre, würden die alte und die neue Position X1, X2 des unteren Angriffspunktes 12 zusammenfallen. Sofern die Drahtelektrode 10, wie dargestellt, gegenüber der Hauptachse Z verkippt war bzw. ist, liegen die alte und sie neue Position X1, X2 um eine Strecke Δ X voneinander entfernt. Hieraus und aus der Antasthöhe HA, der ersten Höhe H1 und der zweiten Höhe H2 des oberen Angriffspunktes 14, 14' kann die Abweichung der Neigung der Drahtelektrode 10 von der Hauptachse Z in der X-Richtung berechnet werden, wie weiter unten anhand von Fig. 5 noch detailliert dargestellt wird. Sobald diese Abweichung berechnet ist, kann sie durch eine entsprechende Kompensationsverschiebung eines der beiden oder aber auch beider Angriffspunkte 12, 14 korrigiert werden. Sofern lediglich gerade Schnitte in Y-Richtung, also senkrecht zur X-Richtung durchgeführt werden sollen, kann das Ausrichtungsverfahren an dieser Stelle beendet werden. Andernfalls muß es für eine zur X-Richtung nicht parallele und vorzugsweise senkrechte Richtung Y wiederholt werden. Dabei besteht die Möglichkeit, ein rechtwinklig oder kreisförmig ausgebildetes Leiterelement 16 zu verwenden (vgl. Fig.7 bzw. 8). Auf diese Weise würde ein Meßgerät, welches einen elektrischen Kontakt zwischen der Drahtelektrode 10 und dem Leiterelement 16 feststellt, für beide Messungen ausreichen.

Aus Gründen der Anschaulichkeit geht die Beschreibung von zwei bewegten Drahtführungen (12, 14) an einer festen Meßstelle aus. Selbstverständlich kommt es dabei nur auf die jeweilige Relativbewegung an. Es ist ebensogut möglich, das erfindungsgemäße Verfahren durchzuführen, wenn die Meßstelle bewegt wird, was einer Parallelverschiebung der beiden Drahtführungen bzw. der Drahtelektrode äquivalent ist, und im übrigen nur eine der beiden Drahtführungen bewegt wird, während die andere Drahtführung unbeweglich ist. Eine solche Konstellation ist sogar üblich. Lediglich um eine möglichst plastische Darstellung zu ermöglichen, wurde auf die anschaulichere Darstellungsform zurückgegriffen. Die Berechnungen sind dann lediglich an die äquivalenten Bewegungen anzupassen.

Eine Möglichkeit zur Berechnung der Abweichung der Neigung einer Drahtelektrode 10 von einer Hauptachse Z in einer Richtung wird anhand von Fig. 5 erläutert. Darin sind alle in Fig.1 bis 4 dargestellten Verschiebungsschritte schematisch zusammengefaßt. Berechnet werden soll eine Fehler- bzw. Korrekturstrecke F, um welche der obere Angriffspunkt zwischen der ersten Höhe H1' und der zweiten Höhe H2' entgegen der X-Richtung, also nach links, verschoben werden muß, um die Drahtelektrode 10 in X-Richtung parallel zur Hauptachse Z auszurichten. Dabei ist die Korrekturstrecke F zwischen den beiden Höhen H1', H2' jeweils gleichlang, da der obere Angriffspunkt 14 im Laufe des Verfahrens nur entlang der Z-Richtung alleine verschoben wird. Die erste und zweite Position X1, X2 des unteren Angriffspunktes 12 sind in diesem Fall als Strecken X1', X2' dargestellt, welche von einer Anfangsposition X0' aus bemessen sind. Die Gesamtstrecke G, welche zwischen der Anfangsposition X0' und der X-Position der Werkstückkante 18 liegt, setzt sich aus diesen Strecken X1', X2' und den der jeweiligen Neigung der Drahtelektrode 10 entsprechenden Reststrecken dX1', dX2' zusammen, d.h.

Gesamtstrecke G = erste Strecke X1'+ erste Reststrecke dX1' = zweite Strecke X2' + zweite Reststrecke dX2'.

Dabei ist die erste Strecke X1' kleiner als die zweite Strecke X2', und dementsprechend die erste Reststrecke dX1' größer als die zweite Reststrecke dX2'.

Beim Übergang des oberen Angriffspunktes 14 von der ersten zur zweiten Höhe H1', H2' in Z-Richtung wandelt sich der Verkippungswinkel in X-Richtung gegenüber der Hauptachse Z von einem ersten, stumpferen Winkel $\Phi$1 zu einem zweiten, spitzeren Winkel $\Phi$2. Definitionsgemäß berechnet sich nun der Tangens des ersten Winkels $\Phi$1 zu

$$\tan \Phi 1 = \text{Gegenkathete / Ankathete} = F / H1.$$

Dabei bedeuten die hier wie im folgenden verwendeten Abkürzungen:

X,Y,Z        zueinander senkrechte Achsrichtungen (Z = Hauptachse)

H0        Nullhöhe (Höhe des unteren Angriffspunktes 12)

| | |
|---|---|
| H1,H2 | erste bzw. zweite Höhe des oberen Angriffspunktes 14 |
| HA | Antasthöhe (Höhe der Kontaktstelle des Leiterelements 16) |
| X0,X1,X2 | X-Positionen des unteren Angriffspunktes 12 |
| $\Delta X$ | Differenz zwischen X2 und X1 |
| dX1,dX2 | erste bzw. zweite Reststrecke |
| G | X1 + dX1 = X2 + dX2 (Gesamtstrecke) |
| $\Phi$ 1,2 | Winkel zwischen Hauptachsrichtung Z und erster bzw. zweiter Raumorientierung der Drahtelektrode 10 |
| F | Korrekturstrecke für den oberen Angriffspunkt 14 zum Ausrichten der Drahtelektrode |

Für den tan $\Phi$1 gilt jedoch aus Symmetriegründen zugleich:

$$\tan \Phi1 = dX1' / HA',$$

woraus folgt:

$$\frac{F}{H_1} = \frac{dX_1}{H_A} \Rightarrow dX_1 = \frac{F \times H_A}{H_1}$$

Analog ergibt sich für die zweite Reststrecke dX2':

$$\frac{F}{H_2} = \frac{dX_2}{H_A} \Rightarrow dX_2 = \frac{F \times H_A}{H_2}$$

Subtrahiert man nun die kleinere zweite Reststrecke dX2' von der größeren ersten Reststrecke dX1' und berücksichtigt man, daß diese Differenz gleich der Differenz aus der größeren zweiten Strecke X2' und der kleineren ersten Strecke X1' ist, so erhält man für die Korrekturstrecke F:

$$dX_1 - dX_2 = \frac{F \times H_A}{H_1} - \frac{F \times H_A}{H_2}$$

$$dX_1 - dX_2 = F \times \left( \frac{H_A}{H_1} - \frac{H_A}{H_2} \right)$$

$$X_2 - X_1 = dX_1 - dX_2$$

$$X_2 - X_1 = F \times \left( \frac{H_A}{H_1} - \frac{H_A}{H_2} \right)$$

$$F = \frac{X_2 - X_1}{\left( \frac{H_A}{H_1} - \frac{H_A}{H_2} \right)}$$

Diese Formel kann auch verwendet werden, wenn anstelle des unteren Angriffspunktes das Werkstück in X-Richtung verschoben wird. Die Parameter $X_1$ bzw. $X_2$ würden sich dann auf die Position der Meßstelle 16, 18 beziehen. Wichtig für das erfindungsgemäße Verfahren ist nur die Positionsänderung $X_2$-$X_1$."

Das beschriebene Verfahren kann im Prinzip für jede beliebige Hauptachse und jede beliebige Bewegungsrichtung verwendet werden. Allerdings werden die abschließenden Berechnungen in der Regel dann aufwendiger. Die Berechnungen einer zweiten Korrekturstrecke erfolgen für eine zweite Verschiebungsstrecke etc. analog.

**Patentansprüche**

1. Verfahren zum Messen und/oder Einstellen der Lage einer Drahtelektrode (10) relativ zu einer maschinenbezogenen Achse (Z) einer Funkenerosionsmaschine, in welcher die Drahtelektrode (10) zwischen zwei Drahtführungen (12, 14) gespannt ist und die beiden Drahtführungen (12, 14) relativ zueinander bewegbar sind, bei welchem Verfahren nacheinander

a) wenigstens eine der beiden Drahtführungen (12, 14) aus einer ersten Position (H1) parallel zur maschinenbezogenen Achse (Z) in eine zweite Position (H2) verschoben (V2) wird;

b) die Größe der hieraus resultierenden Änderung der Drahtelektrodenneigung gegenüber einer beliebigen Achse bezüglich wenigstens einer Richtungskomponente (X, Y) ermittelt wird; und

c) aus dieser Meßgröße, sowie dem Ausmaß der Verschiebung (V2) die räumliche Lage der Drahtelektrode (10) relativ zur maschinenbezogenen Achse (Z) in der wenigstens einen Richtungskomponente (X, Y) berechnet wird.

2. Verfahren nach Anspruch 1, bei welchem nacheinander

a) wenigstens eine Drahtführung (12, 14) quer oder quer und parallel zur maschinenbezogenen Achse (Z) verschoben wird (V1), bis die Drahtelektrode (10) an eine Meßstelle (16, 18) herangeführt ist und die Daten wenigstens einer Drahtführung (12, 14) in dieser Position als erste Positionsdaten (X1) gespeichert werden;

b) wenigstens eine Drahtführung (12, 14) parallel zur maschinenbezogenen Achse (Z) verschoben (V2) wird und hierdurch - und/oder durch zusätzliches Parallelverschieben der Drahtführungen (12, 14) - die Drahtelektrode (10) von der Meßstelle (16, 18) wieder entfernt wird;

c) beide Drahtführungen (12, 14) quer oder quer und parallel zur maschinenbezogenen Achse (Z) parallelverschoben (V3) werden, bis die Drahtelektrode (10) erneut an die Meßstelle (16, 18) herangeführt ist, und die Daten der erreichten zweiten Lage (X2) der wenigstens einen Drahtführung (12, 14) als zweite Positionsdaten (X2) ermittelt werden; und

d) die Lage der Drahtelektrode relativ zu der maschinenbezogenen Achse (Z) und in der Ebene der Parallelverschiebung (V3) aus den ersten und zweiten Positionsdaten (X1, X2), den Abständen (H1, H2) der Drahtführungsebenen vor und nach dem Verschieben (V2) wenigstens einer der beiden Drahtführungen (12, 14) parallel zur maschinenbezogenen Achse (Z) und aus Daten (HA) über die Meßstelle (16, 18) berechnet wird.

3. Verfahren nach Anspruch 2, bei welchem die einzelnen Verfahrensschritte wenigstens für eine zweite, zur ersten nicht parallelen (linear unabhängigen) Verschiebungsrichtung (Y) wiederholt bzw. mit den ersten Verfahrensschritten kombiniert werden.

4. Verfahren nach Anspruch 2 oder 3, bei welchem

a) jeweils nur eine der beiden Drahtführungen (14) parallel zur maschinenbezogenen Achse (Z) verschoben (V2) wird; und

b) die Daten der Lage (X1, X2) der jeweils anderen Drahtführung (12) an der Meßstelle als erste bzw. zweite Positionsdaten (X1, X2) festgestellt werden.

5. Verfahren nach einem der vorstehenden Ansprüche, bei welchem

a) als Meßstelle (16, 18) ein Teilbereich eines elektrisch leitfähigen Elementes (16, 18) verwendet wird;

b) an die Drahtelektrode (10) während des Verfahrens eine elektrische Spannung angelegt wird; und

c) durch das Auftreten bzw. Abbrechen eines elektrischen Kontaktes zwischen der Drahtelektrode (10) und dem elektrisch leitfähigen Element (16; 18) festgestellt wird, ob die Drahtelektrode (10) an die Meßstelle (16, 18) kam bzw. von dieser weg gebracht wurde.

6. Verfahren nach einem der vorstehenden Ansprüche, bei welchem die maschinenbezogene Achse (Z), die Richtung (X, Y) der ersten und/oder der zweiten Parallelverschiebung (V3) zueinander senkrecht stehen.

7. Verfahren nach einem der vorstehenden Ansprüche, bei welchem der als Meßstelle (16, 18) verwendete Teilbereich des oder der elektrisch leitfähigen Elemente(s) (16, 18) geradlinig und insbesondere scharfkantig ausgebildet ist.

8. Verfahren nach Anspruch 7, bei welchem die Richtung(en) der Parallelverschiebung(en) (V3, X, Y) jeweils senkrecht zu der gerade ausgebildeten Kante des jeweiligen elektrisch leitfähigen Elementes (16; 18) erfolgen.

9. Verfahren nach einem der vorstehenden Ansprüche, bei welchem eine Werkstückkante (18) als Meßstelle (16, 18) verwendet wird.

10. Funkenerosionsmaschine, insbesondere zur Durchführung eines Verfahrens nach einem der vorstehenden Ansprüche, in welcher die Drahtelektrode (10) zwischen zwei Drahtführungen (12, 14) gespannt ist, die beiden Drahtführungen (12, 14) relativ zueinander bewegbar sind und eine numerische Steuerungseinrichtung vorgesehen ist, welche zur Messung und/oder Einstellung der Drahtelektrode (10) parallel zu einer maschinenbezogenen Achse (Z) derart ausgelegt ist, daß

a) wenigstens eine der beiden Drahtführungen (12, 14) aus einer ersten Position (H1) parallel zur maschinenbezogenen Achse (Z) in eine zweite Position (H2) verschoben wird;

b) die Größe der hieraus resultierenden Änderung der Drahtelektrodenneigung gegenüber einer beliebigen Achse bezüglich wenigstens einer Richtungskomponente (X, Y) ermittelt wird; und

c) aus dieser Meßgröße, sowie dem Ausmaß der Verschiebung (V2) die räumliche Lage der Drahtelektrode (10) relativ zur maschinenbezogenen Achse (Z) in der wenigstens einen Richtungskomponente (X, Y) berechnet wird.

11. Funkenerosionsmaschine nach Anspruch 10, in welcher eine Meßstelle verwendet wird, die durch eine Innenkante eines im wesentlichen ringförmigen elektrischen Leiterelementes (16) gebildet wird, welches von der Drahtelektrode (10) durchsetzt wird.

Fig. 1

Fig. 2

Fig. 3

Fig. 4

Fig. 5

$$F = \frac{X2 - X1}{HA/H1 - HA/H2}$$

Fig. 6

14

16

10

12

z

x

Fig. 7

10    16

Fig. 8

16

10